# EUROPEAN PATENT APPLICATION

(11) **EP 4 496 049 A1**
(43) Date of publication of application: **22.01.2025**
(21) Application number: 22931710.2
(22) Date of filing: 30.08.2022
(51) Int. Cl.: H01M 10/04, H01M 10/058

(54) **PACKAGING MACHINE**

(30) Priority: 15.03.2022 CN 202210250705
(71) Applicant: Wuxi Lead Intelligent Equipment Co., Ltd., Wuxi, Jiangsu 214028 (CN)
(72) Inventor: CAO, Deyi, Wuxi, Jiangsu 214028 (CN); CHEN, Xiaofei, Wuxi, Jiangsu 214028 (CN)
(74) Representative: Rau, Schneck & Hübner Patentanwälte Rechtsanwälte PartGmbB
(86) International application number: PCT/CN2022/115673
(87) International publication number: WO 2023/173689

(57) **Abstract**

The present application relates to a packaging machine, which includes a vacuum box, a plurality of jigs, a plurality of packaging mechanisms, a plurality of first driving mechanisms and a plurality of second driving mechanisms. The vacuum box includes a vacuum chamber; the plurality of jigs and the plurality of packaging mechanisms are provided within the vacuum chamber and in one-to-one correspondence with each other; the plurality of first driving mechanisms are connected to outside of the vacuum box, and each of the first driving mechanisms includes a driving end which extends into the vacuum chamber and is in transmission connection with one corresponding jig so as to drive the jig to clamp and release an air pocket; the plurality of second driving mechanisms are connected to outside of the vacuum box, and each of the second driving mechanisms includes a driving end which extends into the vacuum chamber and is in transmission connection with one corresponding packaging mechanism so as to drive the packaging mechanism to package the air pocket on the one corresponding jig. By providing the above packaging machine, the first driving mechanisms and the second driving mechanisms will not occupy a space inside the vacuum chamber, which enables more jigs and packaging mechanisms to be placed inside the vacuum chamber, thereby packaging more air pockets simultaneously and improving processing efficiency. (FIG. 3)

## Description

### TECHNICAL FIELD

The present application relates to the field of battery processing, and specifically to a packaging machine.

### BACKGROUND

In the production process of a pouch battery, processes such as liquid injection, formation, gas extraction, and packaging are required. Due to gas generated by the pouch battery during formation thereof, after completion of the formation, puncturing of an air pocket of the pouch battery must be performed first, then the gas extraction, and again the packaging.

In the prior art, a vacuum chamber in a conventional pouch power cell gas-extraction packaging machine suffers from insufficient workstations therein and low processing efficiency thereof, due to the limited chamber space and the complicated driving mechanism provided in the chamber space.

### SUMMARY

In view of the above, it is necessary to provide a packaging machine with many workstations and high processing efficiency in response to the problem of few workstations in the chamber and low processing efficiency of the existing packaging machine.

A packaging machine, including:
a vacuum box with a vacuum chamber;
a plurality of jigs provided within the vacuum chamber;
a plurality of packaging mechanisms provided within the vacuum chamber and in one-to-one correspondence with the plurality of jigs;
a plurality of first driving mechanisms connected to outside of the vacuum box, each of the first driving mechanisms includes a driving end which extends into the vacuum chamber and is in transmission connection with one corresponding jig so as to drive the jig to clamp and release an air pocket; and
a plurality of second driving mechanisms connected to outside of the vacuum box, each of the second driving mechanisms includes a driving end which extends into the vacuum chamber and is in transmission connection with one corresponding packaging mechanism so as to drive the packaging mechanism to package the air pocket on the one corresponding jig.

By providing the above packaging machine, one air pocket is clamped by each jig and then is packaged by a corresponding packaging mechanism, actions of the jigs and the packaging mechanisms are respectively driven by the first driving mechanisms and the second driving mechanisms outside the vacuum box, and the first driving mechanisms and the second driving mechanisms will not occupy a space inside the vacuum chamber, which enables more jigs and packaging mechanisms to be placed inside the vacuum chamber, thereby packaging more air pockets simultaneously and improving processing efficiency.

In one embodiment, each of the jigs includes a first clamping assembly and a second clamping assembly which are sequentially arranged within the vacuum chamber along a first direction and are capable to get close to and far away from each other so as to clamp the air pocket during their getting close to each other, and the first driving mechanism is in transmission connection with the first clamping assembly and/or the second clamping assembly.

In one embodiment, the first clamping assembly includes a first supporting plate, a first fixation block and a first pressing plate, the first supporting plate is provided within the vacuum chamber in a reciprocatable manner along the first direction, and is lengthwise arranged along a second direction perpendicular to the first direction; the first fixation block is connected to a side of the first supporting plate away from the second clamping assembly and is located in the middle of the first supporting plate in the second direction; the driving end of the first driving mechanism is in transmission connection with the first fixation block; and the first pressing plate is connected to a side of the first supporting plate close to the second clamping assembly and is used for cooperating with the second clamping assembly to clamp the air pocket.

In one embodiment, the first clamping assembly further includes a first clamping plate which is connected to the first supporting plate, has a height greater than that of the first pressing plate, and is used for supporting a top of the air pocket.

In one embodiment, the second clamping assembly includes a second supporting plate, a second fixation block and a second pressing plate, the second supporting plate is provided within the vacuum chamber in a reciprocatable manner along the first direction, and is lengthwise arranged along a second direction perpendicular to the first direction; the second fixation block is connected to a side of the second supporting plate away from the second clamping assembly and is located in a middle position of the second supporting plate in the second direction; the driving end of the second driving mechanism is in transmission connection with the second fixation block; and the second pressing plate is connected to a side of the second supporting plate close to the second clamping assembly and is used for cooperating with the first clamping assembly to clamp the air pocket.

In one embodiment, the second clamping assembly further includes a second clamping plate which is connected to the second supporting plate, has a height greater than that of the second pressing plate, and is used for supporting a top of the air pocket.

In one embodiment, both the first clamping assembly and the second clamping assembly are reciprocatable along the first direction, and each of the jigs includes a linkage member which is connected between the first clamping assembly and the second clamping assembly to enable the first clamping assembly and the second clamping assembly to be synchronously close to each other and to be synchronously away from each other.

In one embodiment, each of the jigs further includes a guiding rod and a limiter, wherein the guiding rod is arranged lengthwise within the vacuum chamber along the first direction, the first clamping assembly and/or the second clamping assembly is slidably connected to the guiding rod, and the limiter is disposed on the guiding rod for limiting movement of the first clamping assembly and/or the second clamping assembly.

In one embodiment, each of the first driving mechanisms includes a mounting frame, a first clamping-driving assembly and a second clamping-driving assembly, the mounting frame is connected to outside of the vacuum box, the first clamping-driving assembly and the second clamping-driving assembly are both provided on the mounting frame, the first clamping-driving assembly has a driving end which extends into the vacuum chamber and is in transmission connection with the first clamping assembly, and the second clamping-driving assembly has a driving end which extends into the vacuum chamber and is in transmission connection with the second clamping assembly.

In one embodiment, the first clamping-driving assembly includes a first clamping driver, a first transmission rod and a first connection block, the first clamping driver is provided on the mounting frame and is in transmission connection with the first transmission rod so as to drive the first transmission rod to reciprocate along the first direction, the first transmission rod extends lengthwise along the first direction and has one end extending into the vacuum chamber, and the first connection block is connected between the one end of the first transmission rod extending into the vacuum chamber and the first clamping assembly.

In one embodiment, the second clamping-driving assembly includes a second clamping driver, a second transmission rod and a second connection block, the second clamping driver is provided on the mounting frame and is in transmission connection with the second transmission rod so as to drive the second transmission rod to reciprocate along the first direction, the second transmission rod extends lengthwise along the first direction and has one end extending into the vacuum chamber, and the second connection block is connected between the one end of the second transmission rod extending into the vacuum chamber and the second clamping assembly.

In one embodiment, each of the packaging mechanisms includes a first cap assembly and a second cap assembly which are sequentially arranged within the vacuum chamber along a first direction, the first cap assembly is reciprocatable along the first direction, and the second driving mechanism is in transmission connection with the first cap assembly to drive the first cap assembly to be close to and away from the second cap assembly.

In one embodiment, the first cap assembly includes a cap and an adsorber, the cap is provided within the vacuum chamber in a reciprocatable manner along the first direction for cooperating with the second cap assembly to package the air pocket, and the adsorber is provided at a side of the cap toward the second cap assembly for adsorbing and grabbing the air pocket.

In one embodiment, the packaging machine further includes a puncturing mechanism which is provided within the vacuum chamber for puncturing the air pocket clamped by the jig.

In one embodiment, the vacuum box includes a bottom frame, a middle frame, and a top cover which are connected in sequence;

the plurality of jigs and the plurality of first driving mechanisms are connected to the bottom frame, the plurality of packaging mechanisms and the plurality of second driving mechanisms are connected to the middle frame, and the puncturing mechanism is connected to the top cover.

### BRIEF DESCRIPTION OF THE DRAWINGS

In order to more clearly illustrate embodiments of the present application or technical solutions in the prior art, accompanying drawings that need to be used in description of the embodiments or the prior art will be briefly introduced as follows. Obviously, drawings in following description are only the embodiments of the present application. For those skilled in the art, other drawings can also be obtained according to the disclosed drawings without creative efforts.
FIG. 1 is a schematic structural diagram of a packaging machine provided by an embodiment of the present application;
FIG. 2 is a schematic structural diagram of a bottom frame, jigs and first driving mechanisms provided by another embodiment of the present application;
FIG. 3 is a schematic structural top diagram of the bottom frame, the jigs and the first driving mechanisms shown in FIG. 2;
FIG. 4 is a structural schematic side diagram of the bottom frame, the jigs and the first driving mechanism shown in FIG. 2;
FIG. 5 is a schematic structural view of some components of the jigs and the first driving mechanisms shown in FIG. 2;
FIG. 6 is a schematic structural top diagram of some components of the jigs and the first driving mechanisms shown in FIG. 5;
FIG. 7 is a structural schematic diagram of some components of the first driving mechanisms shown in FIG. 2;
FIG. 8 is a structural schematic diagram of a middle frame, packaging mechanisms and second driving mechanisms provided by yet another embodiment of the present application;
FIG. 9 is a schematic structural top diagram of the middle frame, the packaging mechanisms and the second driving mechanisms shown in FIG. 8.

### DETAILED DESCRIPTION

In order to make the above objects, features and advantages of the present application more clearly understood, specific embodiments of the present application will be described in detail below with reference to the accompanying drawings. In a following description, numerous specific details are set forth in order to provide a thorough understanding of the present application. However, the present application can be implemented in many other ways different from those described here, and those skilled in the art can make similar improvements without violating a connotation of the present application. Therefore, the present application is not limited by the specific embodiments disclosed below.

In the description of the present application, it should be understood that, an orientation or positional relationship indicated by terms "center", "longitudinal", "lateral", "length", "width", "thickness", "upper", "lower", "front", "back", "left", "right", "vertical", "horizontal", "top", "bottom", inner", "outer", "clockwise", "counterclockwise", "axial", "radial", "circumferential" is based on the orientation or positional relationship shown in the accompanying drawings, and is only for convenience of describing the present application and simplifying the description, rather than indicating or implying that a device or element referred to must be provided with a particular orientation, be constructed and operate in a particular orientation, and therefore should not be understood as a limitation to the present application.

In addition, terms "first" and "second" are only used for descriptive purposes and should not be understood as indicating or implying relative importance or implying a number of indicated technical features. Therefore, a feature delimited with "first", "second" may expressly or implicitly include at least one of those features. In a description of the present application, "a plurality" means at least two, such as two, three, etc., unless expressly and specifically defined otherwise.

In the present application, unless expressly specified and limited otherwise, terms "installed", "communicated", "connected", "fixed" and other terms should be interpreted in a broad sense, for example, it can be a fixed connection, a detachable connection, or an integrated; it can be a mechanical connection or an electrical connection; it can be directly connected, or indirectly connected through an intermediate medium, and it can be an internal communication between two elements or an interaction relationship between the two elements, unless otherwise explicitly defined. For those of ordinary skill in the art, specific meanings of the above terms in the present application can be understood according to specific situations.

In the present application, unless expressly stated and defined otherwise, a first feature "on" or "under" a second feature may be that the first feature is in direct contact with the second feature, or the first feature and the second feature are indirectly contacted through an intermediary. In addition, the first feature being "above", "over" and "on" the second feature may mean that the first feature is directly above or obliquely above the second feature, or simply means that the first feature is higher than the second feature in a horizontal direction. The first feature being "below", "under" and "beneath" the second feature may mean that the first feature is directly below or obliquely below the second feature, or simply means that the first feature is smaller than the second feature in a horizontal direction.

It should be noted that when an element is referred to as being "fixed to" or "arranged on" another element, it can be directly on another element, or an intervening element may also be present. When an element is referred to as being "connected" to another element, it can be directly connected to another element or intervening elements may also be present. Terms "vertical", "horizontal", "upper", "lower", "left", "right" and similar expressions used here are only for a purpose of illustration and do not represent an only embodiment.

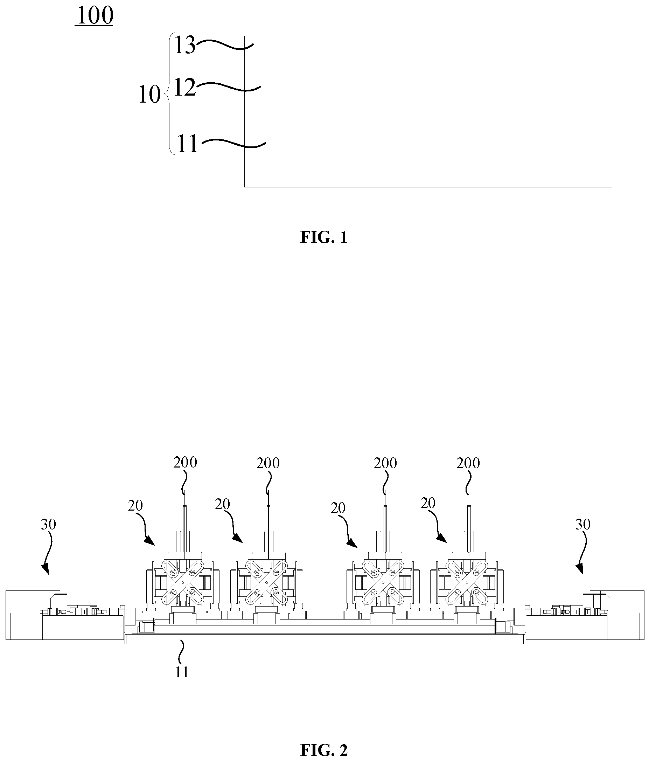

As shown in FIGs 1, 2 and 8, a packaging machine 100 provided by an embodiment of the present application includes a vacuum box 10, a plurality of jigs 20, a plurality of first driving mechanisms 30, a plurality of packaging mechanisms 40 and a plurality of second driving mechanisms 50.

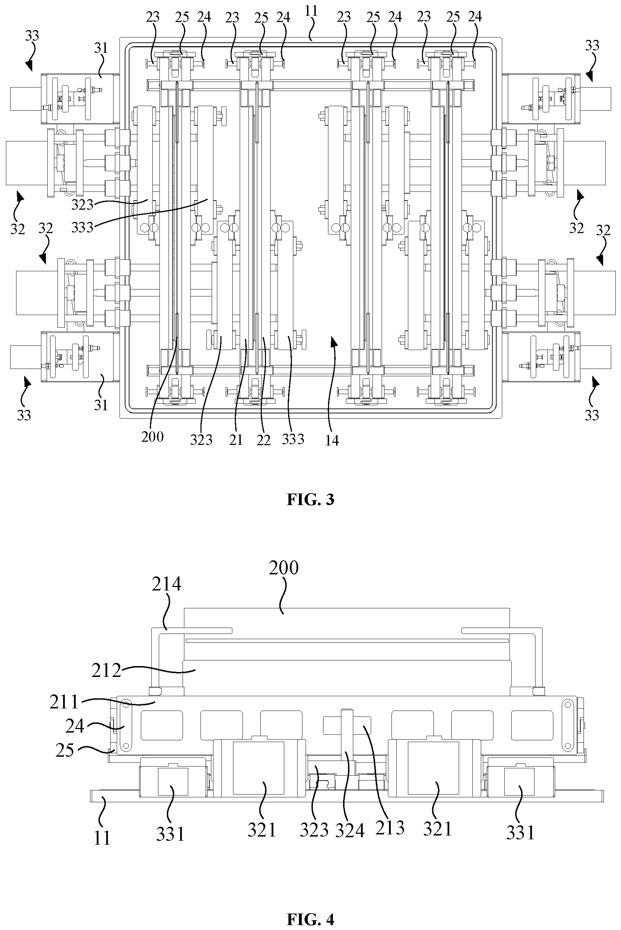

The vacuum box 10 is provided with a vacuum chamber 14 (see FIG. 3). The plurality of jigs 20 and the plurality of packaging mechanisms 40 are provided within the vacuum chamber 14 and are in one-to-one correspondence with each other.

The plurality of first driving mechanisms 30 and the plurality of second driving mechanisms 50 are connected to outside of the vacuum box 10. Each of the first driving mechanisms 30 includes the driving end which extends into the vacuum chamber 14 and is in transmission connection with one corresponding jig 20 so as to drive the jig 20 to clamp and release an air pocket 200.

By providing the above packaging machine, one air pocket 200 is clamped by each jig 20 and then is packaged by a corresponding packaging mechanism 40, actions of the jigs 20 and the packaging mechanisms 40 are respectively driven by the first driving mechanisms 30 and the second driving mechanisms 50 outside the vacuum box 10, and the first driving mechanisms 30 and the second driving mechanisms 50 will not occupy a space inside the vacuum chamber 14, which enables more jigs 20 and packaging mechanisms 40 to be placed inside the vacuum chamber 14, thereby packaging more air pockets 200 simultaneously and improving processing efficiency.

In some embodiments, the vacuum box 10 includes a bottom frame 11, a middle frame 12, and a top cover 13 which are connected in sequence to enclose the vacuum box 10 with the above vacuum chamber 14.

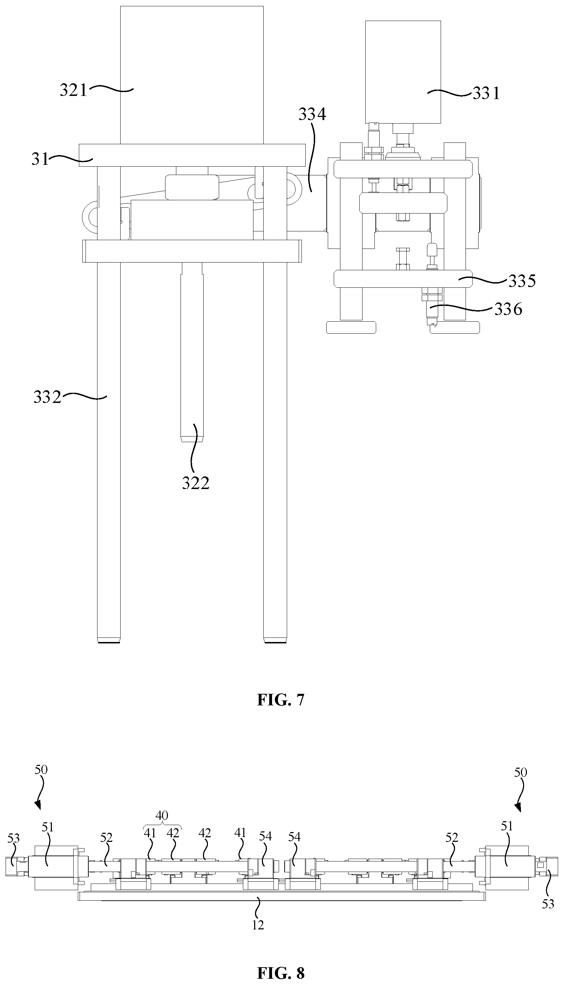

Please refer to FIGs 2 and 8, the plurality of jigs 20 and the plurality of first driving mechanisms 30 are connected to the bottom frame 11, and the plurality of packaging mechanisms 40 and the plurality of second driving mechanisms 50 are connected to the middle frame 12. By referring to FIG. 1, it can be seen that the plurality of packaging mechanisms 40 is located above the plurality of jigs 20, and are in one-to-one correspondence with the plurality of jigs 20 in the vertical direction.

In addition, it should be noted that the bottom frame 11 and the middle frame 12 shown in FIGs 2 and 8 do not show sides.

Further, the plurality of jigs 20 are arranged at intervals along the first direction, and correspondingly the plurality of packaging mechanisms 40 are arranged at intervals along the first direction.

Wherein, the first direction is the left-right direction in FIGs 2 and 3.

In a practical application, the number of jigs 20, the packaging mechanisms 40, the first driving mechanism 30 and the second driving mechanism 50 is four, wherein two first driving mechanisms 30 are connected to one side of the bottom frame 11 along the first direction, the other two first driving mechanisms 30 are connected to the other side of the bottom frame 11 along the first direction, two second driving mechanisms 50 are connected to one side of the middle frame 12 along the first direction, and the other two second driving mechanisms 50 are connected to one side of the middle frame 12 along the first direction.

Please refer to FIGs 2, 3 and 5, in some embodiments, each of the jigs 20 includes a first clamping assembly 21 and a second clamping assembly 22 which are sequentially arranged within the vacuum chamber 14 along the first direction and are capable to get close to and far away from each other so as to clamp the air pocket 200 during their getting close to each other, and the first driving mechanism 30 is in transmission connection with the first clamping assembly 21 and/or the second clamping assembly 22 so as to drive the first clamping assembly 21 and the second clamping assembly 22 to be close to and away from each other.

It can be understood that, as for the first clamping assembly 21 and the second clamping assembly 22 closing to and away from each other, both the first clamping assembly 21 and the second clamping assembly 22 may reciprocate along the first direction, or one of the first clamping assembly 21 and the second clamping assembly 22 may reciprocate along the first direction.

Of course, preferably, in the present embodiment, both the first clamping assembly 21 and the second clamping assembly 22 may reciprocate along the first direction, subsequent embodiments will be described with this preferred embodiment, but it does not affect the application of the structures in the subsequent embodiments to other embodiments.

Please refer to FIGs 3-5, in some embodiments, each of the jigs 20 further includes a guiding rod 23 which is arranged lengthwise within the vacuum chamber 14 along the first direction, and the first clamping assembly 21 and the second clamping assembly 22 are slidably connected to the guiding rod 23 so as to guide movement of the first clamping assembly 21 and the second clamping assembly 22 through the guiding rod 23.

Further, each of jigs 20 includes a plurality of guiding rods 23 which are divided into two groups, the two groups of guiding rods 23 are arranged at intervals along the second direction perpendicular to the first direction, the first clamping assembly 21 and the second clamping assembly 22 are arranged lengthwise along the second direction, and the two ends of the first clamping assembly 21 and the second clamping assembly 22 along the second direction are respectively slidably connected to two groups of guiding rods 23.

Wherein, the second direction is a direction perpendicular to the paper plane in FIG. 2, and the second direction is the up-down direction in FIG. 3.

In a practical application, each group of guiding rods 23 includes two guiding rods.

In some embodiments, each of jigs 20 further includes a limiter 24 which is provided on the guiding rod 23 for limiting movement of the first clamping assembly 21 and the second clamping assembly 22.

In a practical application, both ends of each guiding rod 23 are connected with the limiter 24, and the first clamping assembly 21 and the second clamping assembly 22 may abut against the limiter 24 during movement so as to limit movement of the first clamping assembly 21 and the second clamping assembly 22.

In some embodiments, each of the jigs 20 includes a linkage member 25 which is connected between the first clamping assembly 21 and the second clamping assembly 22 such that the first clamping assembly 21 and the second clamping assembly 22 are synchronously close to each other and to be synchronously away from each other so as ensure the accuracy of clamping the air pocket 200 by the first clamping assembly 21 and the second clamping assembly 22.

It can be understood that by realizing linkage between the first clamping assembly 21 and the second clamping assembly 22 by the linkage member 25, it is possible to reduce the number of limiters 24 used, that is, by providing the limiter 24 at one end of the guiding rod 23, it is also possible to limit the movement of the first clamping assembly 21 and the second clamping assembly 22 simultaneously.

In practical application, the linkage member 25 is a scissor.

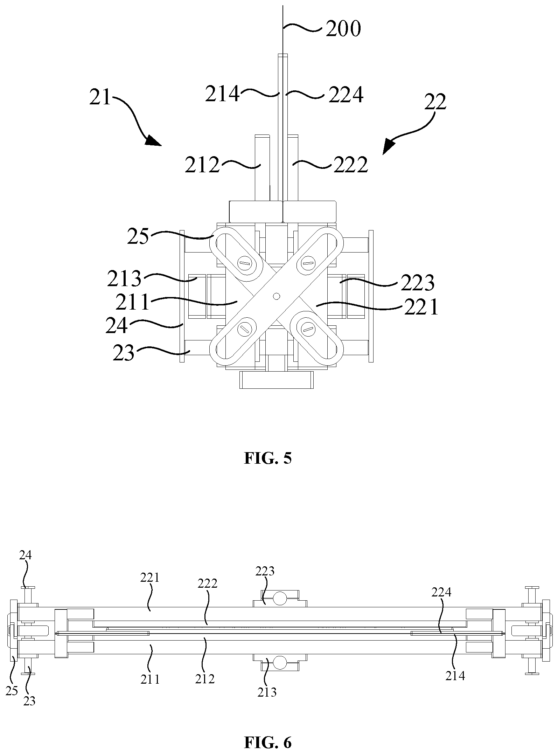

Please refer to FIGs 5-6, in some embodiment, the first clamping assembly 21 includes a first supporting plate 211 and a first pressing plate 212, and the first supporting plate 211 is provided within the vacuum chamber 14 in the reciprocating manner along the first direction and is connected to a side of the first supporting plate 211 close to the second clamping assembly 22 for cooperating with the second clamping assembly 22 to clamp the air pocket 200.

Further, the first clamping assembly 21 further includes a first fixation block 213, the first supporting plate 211 is arranged lengthwise along the second direction, the first fixation block 213 is connected to a side of the first supporting plate 211 away from the second clamping assembly 22 and is located in the middle position of the first supporting plate 211 in the second direction. The driving end of the first driving mechanism 30 is in transmission connection with the first fixation block 213. In this way, the driving force of the driving end is applied to a middle position of the first supporting plate 211, thereby preventing the first supporting plate 211 from shifting during the movement.

In some embodiments, the first clamping assembly 21 further includes a first clamping plate 214 which is connected to the first supporting plate 211 and has a height greater than that of the first pressing plate 212. The first pressing plate 212 cooperates with the second clamping assembly 22 to clamp and fix the air pocket 200, while the first clamping plate 214 is used for supporting the top of the air pocket 200.

In some embodiment, the second clamping assembly 22 includes a second supporting plate 221 and a second pressing plate 222, the second supporting plate 221 is provided within the vacuum chamber 14 in the reciprocating manner along the first direction and is connected to a side of the second supporting plate 221 close to the first clamping assembly 21 for cooperating with the first clamping assembly 21 to clamp the air pocket 200.

Further, the second clamping assembly 22 further includes a second fixation block 223, the second supporting plate 221 is arranged lengthwise along the second direction, the second fixation block 223 is connected to a side of the second supporting plate 221 away from the first clamping assembly 21 and is located in the middle position of the second supporting plate 221 in the second direction. The driving end of the first driving mechanism 30 is in transmission connection with the second fixation block 223.

In some embodiment, the second clamping assembly 22 further includes a second clamping plate 224 which is connected to the second supporting plate 221 and has a height greater than that of the second pressing plate 222. The second pressing plate 222 cooperates with the first pressing plate 212 to clamp and fix the air pocket 200, while the first clamping plate 214 and the second clamping plate 224 are used for supporting the top of the air pocket 200.

Please refer to FIGs 3, 4 and 7, in some embodiments, each of the first driving mechanisms 30 includes a mounting frame 31, a first clamping-driving assembly 32 and a second clamping-driving assembly 33, the mounting frame 31 is connected to outside of the vacuum box 10, the first clamping-driving assembly 32 and the second clamping-driving assembly 33 are both provided on the mounting frame 31, the first clamping-driving assembly 32 has a driving end which extends into the vacuum chamber 14 and is in transmission connection with the first clamping assembly 21, and the second clamping-driving assembly 33 has a driving end which extends into the vacuum chamber 14 and is in transmission connection with the second clamping assembly 22, so as to respectively drive the first clamping assembly 21 and the second clamping assembly 22 to reciprocate along the first direction, therefore enabling the first clamping assembly 21 and the second clamping assembly 22 to be close to and away from each other.

In a practical application, the mounting frame 31 is connected to the bottom frame 11.

In some embodiment, the first clamping-driving assembly 32 includes a first clamping driver 321, a first transmission rod 322 and a first connection block 323, the first clamping driver 321 is provided on the mounting frame 31 and is in transmission connection with the first transmission rod 322 so as to drive the first transmission rod 322 to reciprocate along the first direction, the first transmission rod 322 extends lengthwise along the first direction and has one end extending into the vacuum chamber 14, and the first connection block 323 is connected between the one end of the first transmission rod 322 extending into the vacuum chamber 14 and the first clamping assembly 21.

Further, the first connection block 323 is reciprocally connected to the bottom frame 11 along the first direction, and is connected to the first fixation block 213 so as to transmit the driving force to the middle position of the first supporting plate 211 through the first connection block 323 and the first fixation block 213.

In a practical application, the first clamping-driving assembly 32 further includes a first connection shaft 324. The first connection block 323 is located below the first fixation block 213, and the first connection shaft 324 is connected between the first connection block 323 and the first fixation block 213.

In some embodiment, the second clamping-driving assembly 33 includes a second clamping driver 331, a second transmission rod 332 and a second connection block 333, the second clamping driver 331 is provided on the mounting frame 31 and is in transmission connection with the second transmission rod 332 so as to drive the second transmission rod 332 to reciprocate along the first direction, the second transmission rod 332 is arranged lengthwise along the first direction and has one end extending into the vacuum chamber 14, and the second connection block 333 is connected between the one end of the second transmission rod 332 extending into the vacuum chamber 14 and the second clamping assembly 22.

Similarly, the second connection block 333 is reciprocally connected to the bottom frame 11 along the first direction, and the second connection block 333 is connected to the second fixation block 223 through the second connection shaft.

It can be understood that, for the first clamping-driving assembly 32 and the second clamping-driving assembly 33 located on the same side of the bottom frame 11 along the first direction, since the first clamping assembly 21 and the second clamping assembly 22 are sequentially arranged along the first direction, the lengths of the first transmission rod 322 and the second transmission rod 332 are different. As shown in FIG. 7, the length of the first transmission rod 322 is shorter than the length of the second transmission rod 332. At the same time, in order to ensure the stability of the transmission, the number of the longer second transmission rod 332 is two.

In addition, for the first drive mechanisms 30 that drives the middle jigs 20, as shown in FIG. 3, for the two first drive mechanisms 30 that drive the two middle jigs 20, the first transmission rod 322 and the second transmission rod 332 of the two first driving mechanisms have a relatively long length, goes under the two jigs 20 on the side, and then are connected with the first connection block 323 and the second connection block 333 respectively.

It should be noted that, in order to ensure the airtightness of the vacuum chamber 14, when the first transmission rod 322 and the second transmission rod 332 pass through the bottom frame 11, the first transmission rod 322 and the second transmission rod 332 and the bottom frame 11 are provided with a sealing structure therebetween.

In some embodiments, the second clamping-driving assembly 33 further includes a driving block 334 and a limiting block 335, the driving block 334 is connected between the second clamping driver 331 and the second transmission rod 332, and the limiting block 335 is connected with the mounting frame 31 for limiting the moving range of the driving block 334, so as to limit the moving range of the second clamping assembly 22, thereby avoiding crushing the air pocket 200.

It can be determined that due to the linkage effect of the linkage member 25, the limiting block 335 limits the moving range of the second clamping assembly 22, and can also indirectly limit the moving range of the first clamping assembly 21. Certainly, in other embodiments, it is also possible to additionally provide a limiting structure to limit the moving range of the first transmission rod 322, thereby limiting the moving range of the first clamping assembly 21 and further avoiding crushing the air pocket 200 by the first pressing plate 212 and the second pressing plate 212.

Further, the second clamping-driving assembly 33 further includes a buffer member 336 which is connected with the limiting block 335 and is used for abutting against the driving block 334, so that the limiting block 335 is buffered against the driving block 334.

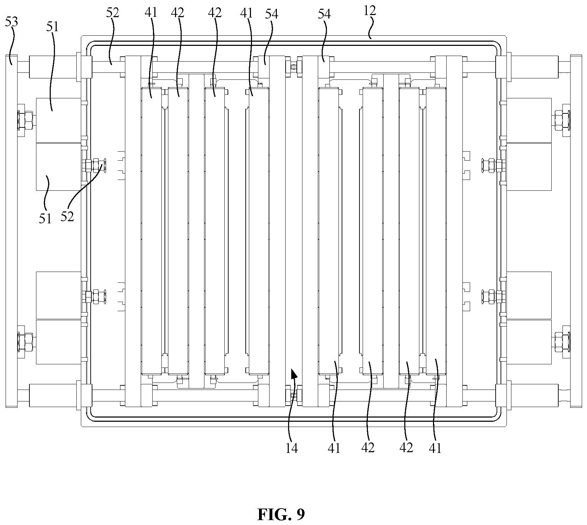

Please refer to FIGs 8 and 9, in some embodiment, each of the packaging mechanisms 40 includes a first cap assembly 41 and a second cap assembly 42 which are sequentially arranged within the vacuum chamber 14 along the first direction, the first cap assembly 41 is reciprocatable along the first direction, and the second driving mechanism 50 is in transmission connection with the first cap assembly 41 to drive the first cap assembly 41 to be close to and away from the second cap assembly 42, while the air pocket 200 can be sealed when the first cap assembly 41 is close to the second cap assembly 42.

In some embodiment, the first cap assembly 41 includes a cap and an adsorber, the cap is provided within the vacuum chamber 14 in the reciprocating manner along the first direction and is used for cooperating with the second cap assembly 42 to package the air pocket 200, and the adsorber is provided at a side of the cap towards the second cap assembly 42 for adsorbing and grabbing the air pocket 200.

It can be understood that the first cap assembly 41 and the second cap assembly 42 have the same structure, and the difference therebetween is that: the first cap assembly 41 is connected to the middle frame 12 in a reciprocatable manner along the first direction, while the second cap assembly 42 is fixed to middle frame 12.

In some embodiments, the second driving mechanism 50 includes a packaging driver 51 and a connection rod 52, the packaging driver 51 is connected to outside of the vacuum box 10 and is in transmission connection with the connection rod 52, so as to drive the connection rod 52 to reciprocate along the first direction, and the connection rod 52 extends along the first direction and has one end which extends into the vacuum chamber 14 and is in transmission connection with the first cap assembly 41.

It can be understood that a sealing structure is also provided between the connection rod 52 and the vacuum box 10.

In a practical application, each packaging driver 51 includes two packaging drivers 51 and two connection rods 52 so as to improve the stability of the driving.

It should be noted that, as shown in FIG. 9, since the four packaging mechanisms 40 are arranged at intervals along the first direction, for the second drive mechanism 50 that drives the middle two packaging mechanisms 40, the length of the connection rod 52 is longer. At the same time, for the convenience of installation, a connection plate 53 may be additionally provided in the two packaging mechanisms 40, such that the two longer connection rods 52 are arranged at intervals along the second direction, and then connected to the corresponding first cap assembly 41 via the connection seat 54.

In some embodiment, the packaging machine further includes a puncturing mechanism which is provided within the vacuum chamber 14 for puncturing the air pocket 200 clamped by the jig 20.

It should be explained that both the first cap assembly 41 and the second cap assembly 42 are provided with the adsorber, and the adsorbers of the first cap assembly 41 and the second cap assembly 42 may be adsorbed on both sides of the air pocket 200. After the puncturing mechanism punctures the air pocket 200, the first cap assembly 41 moves to pull the air pocket 200 apart, so as to better extract the gas in the air pocket 200.

In a practical application, the puncturing mechanism is connected to the top cover 13.

It should be noted that, as shown in FIG. 1, the middle frame 12 and the top cover 13 may move vertically so that the bottom frame 11, the middle frame 12 and the top cover 13 are separated from each other, and when the jigs 20 or packaging mechanisms 40 need to be repaired, the middle frame 12 or top cover 13 may be removed respectively.

The technical features of the above embodiments can be combined arbitrarily. In order to simplify the description, all possible combinations of the technical features in the above embodiments are not described. However, as long as there is no contradiction in the combination of these technical features, it should be considered as a scope of this description.

The above embodiments only express several embodiments of the present application, and the description is more specific and detailed, but it cannot be understood as a limitation on the scope of the present application. It should be noted that for those skilled in the art, several modifications and improvements can be made without departing from a concept of the present application, which belong to a protective scope of the present application. Therefore, the protective scope of the present application shall be subject to the appended claims.

## Claims

1. A packaging machine, comprising:
a vacuum box with a vacuum chamber;
a plurality of jigs provided within the vacuum chamber;
a plurality of packaging mechanisms provided within the vacuum chamber and in one-to-one correspondence with the plurality of jigs;
a plurality of first driving mechanisms connected to outside of the vacuum box, each of the first driving mechanisms comprises a driving end which extends into the vacuum chamber and is in transmission connection with one corresponding jig so as to drive the jig to clamp and release an air pocket; and
a plurality of second driving mechanisms connected to outside of the vacuum box, each of the second driving mechanisms comprises a driving end which extends into the vacuum chamber and is in transmission connection with one corresponding packaging mechanism so as to drive the packaging mechanism to package the air pocket on the one corresponding jig.

2. The packaging machine of claim 1, wherein each of the jigs comprises a first clamping assembly and a second clamping assembly which are sequentially arranged within the vacuum chamber along a first direction and are capable to get close to and far away from each other, so as to clamp the air pocket during their getting close to each other, and the first driving mechanism is in transmission connection with the first clamping assembly and/or the second clamping assembly.

3. The packaging machine of claim 2, wherein the first clamping assembly comprises a first supporting plate, a first fixation block and a first pressing plate, the first supporting plate is provided within the vacuum chamber in a reciprocatable manner along the first direction, and is lengthwise arranged along a second direction perpendicular to the first direction; the first fixation block is connected to a side of the first supporting plate away from the second clamping assembly and is located in a middle position of the first supporting plate in the second direction; the driving end of the first driving mechanism is in transmission connection with the first fixation block; and the first pressing plate is connected to a side of the first supporting plate close to the second clamping assembly and is used for cooperating with the second clamping assembly to clamp the air pocket.

4. The packaging machine of claim 3, wherein the first clamping assembly further comprises a first clamping plate which is connected to the first supporting plate, has a height greater than that of the first pressing plate, and is used for supporting a top of the air pocket.

5. The packaging machine of claim 2, wherein the second clamping assembly comprises a second supporting plate, a second fixation block and a second pressing plate, the second supporting plate is provided within the vacuum chamber in a reciprocatable manner along the first direction, and is lengthwise arranged along a second direction perpendicular to the first direction; the second fixation block is connected to a side of the second supporting plate away from the second clamping assembly and is located in a middle position of the second supporting plate in the second direction; the driving end of the second driving mechanism is in transmission connection with the second fixation block; and the second pressing plate is connected to a side of the second supporting plate close to the second clamping assembly and is used for cooperating with the first clamping assembly to clamp the air pocket.

6. The packaging machine of claim 5, wherein the second clamping assembly further comprises a second clamping plate which is connected to the second supporting plate, has a height greater than that of the second pressing plate, and is used for supporting a top of the air pocket.

7. The packaging machine of claim 2, wherein both the first clamping assembly and the second clamping assembly are reciprocatable along the first direction, and each of the jigs comprises a linkage member which is connected between the first clamping assembly and the second clamping assembly to enable the first clamping assembly and the second clamping assembly to be synchronously close to each other and to be synchronously away from each other.

8. The packaging machine of claim 2, wherein each of the jigs further comprises a guiding rod and a limiter, wherein the guiding rod is arranged lengthwise within the vacuum chamber along the first direction, the first clamping assembly and/or the second clamping assembly is slidably connected to the guiding rod, and the limiter is disposed on the guiding rod for limiting movement of the first clamping assembly and/or the second clamping assembly.

9. The packaging machine of claim 2, wherein each of the first driving mechanisms comprises a mounting frame, a first clamping-driving assembly and a second clamping-driving assembly, the mounting frame is connected to outside of the vacuum box, the first clamping-driving assembly and the second clamping-driving assembly are both provided on the mounting frame, the first clamping-driving assembly has a driving end which extends into the vacuum chamber and is in transmission connection with the first clamping assembly, and the second clamping-driving assembly has a driving end which extends into the vacuum chamber and is in transmission connection with the second clamping assembly.

10. The packaging machine of claim 9, wherein the first clamping-driving assembly comprises a first clamping driver, a first transmission rod and a first connection block, the first clamping driver is provided on the mounting frame and is in transmission connection with the first transmission rod so as to drive the first transmission rod to reciprocate along the first direction, the first transmission rod extends lengthwise along the first direction and has one end extending into the vacuum chamber, and the first connection block is connected between the one end of the first transmission rod extending into the vacuum chamber and the first clamping assembly.

11. The packaging machine of claim 10, wherein the second clamping-driving assembly comprises a second clamping driver, a second transmission rod and a second connection block, the second clamping driver is provided on the mounting frame and is in transmission connection with the second transmission rod so as to drive the second transmission rod to reciprocate along the first direction, the second transmission rod extends lengthwise along the first direction and has one end extending into the vacuum chamber, and the second connection block is connected between the one end of the second transmission rod extending into the vacuum chamber and the second clamping assembly.

12. The packaging machine of claim 1, wherein each of the packaging mechanisms comprises a first cap assembly and a second cap assembly which are sequentially arranged within the vacuum chamber along a first direction, wherein the first cap assembly is reciprocatable along the first direction, and the second driving mechanism is in transmission connection with the first cap assembly to drive the first cap assembly to be close to and away from the second cap assembly.

13. The packaging machine of claim 12, wherein the first cap assembly comprises a cap and an adsorber, the cap is provided within the vacuum chamber in a reciprocatable manner along the first direction for cooperating with the second cap assembly to package the air pocket, and the adsorber is provided at a side of the cap toward the second cap assembly for adsorbing and grabbing the air pocket.

14. The packaging machine of any one of claims 1-13, wherein the packaging machine further comprises a puncturing mechanism which is provided within the vacuum chamber for puncturing the air pocket clamped by the jig.

15. The packaging machine of claim 14, wherein the vacuum box comprises a bottom frame, a middle frame, and a top cover which are connected in sequence;
the plurality of jigs and the plurality of first driving mechanisms are connected to the bottom frame, the plurality of packaging mechanisms and the plurality of second driving mechanisms are connected to the middle frame, and the puncturing mechanism is connected to the top cover.
